# EUROPÄISCHE PATENTSCHRIFT

(11) **EP 3 601 815 B1**
(45) Veröffentlichungstag und Bekanntmachung des Hinweises auf die Patenterteilung: **31.08.2022**
(21) Anmeldenummer: 18708399.3
(22) Anmeldetag: 01.03.2018
(51) Int. Cl.: F16B 13/04, G01B 21/16

(54) **ANORDNUNG EINES ANKERS IN EINEM ANKERLOCH UND BEFESTIGUNGSSYSTEM**
ARRANGEMENT OF AN ANCHOR IN AN ANCHORING HOLE, AND FASTENING SYSTEM
AGENCEMENT D'UN SYSTÈME D'ANCRAGE DANS UN TROU D'ANCRAGE ET SYSTÈME DE FIXATION

(30) Priorität: 27.03.2017 DE 102017106485
(43) Veröffentlichungstag der Anmeldung: 05.02.2020
(73) Patentinhaber: fischerwerke GmbH & Co. KG, 72178 Waldachtal (DE)
(72) Erfinder: HORN, Sebastian, 71083 Herrenberg (DE); SCHWAB, Johann, 72202 Nagold (DE)
(86) Internationale Anmeldenummer: PCT/EP2018/055002
(87) Internationale Veröffentlichungsnummer: WO 2018/177675

(56) Entgegenhaltungen:
- EP-A1- 0 605 811
- EP-A2- 2 141 480
- WO-A1-2013/113586
- KR-A- 20120 019 584
- US-A- 4 632 352

## Beschreibung

Die Erfindung betrifft eine Anordnung eines Ankers in einem Ankerloch mit den Merkmalen des Oberbegriffs des Anspruchs 1.

Ein Anker im Sinne der Erfindung ist ein Bauelement zu einer Befestigung in einem Ankerloch in einem Ankergrund aus beispielsweise Stein, Beton oder Mauerwerk. Die Befestigung wird auch als Verankerung bezeichnet. Das Ankerloch kann gebohrt, in anderer Weise hergestellt oder von vornherein vorhanden sein. Das Ankerloch kann beispielsweise zylindrisch sein, und auch einen beispielsweise konischen oder stufenförmigen Hinterschnitt aufweisen, es kann auch eine unregelmäßige Form aufweisen. Der Anker kann beispielsweise mechanisch durch Aufspreizen oder chemisch mit einer aushärtenden bzw. ausgehärteten Masse, beispielsweise einem Mörtel, auch einem Kunstharzmörtel, im Ankerloch verankert sein. Eine mechanische Verankerung bedeutet einen Kraft- und/oder Formschluss im Ankerloch, wobei ein Formschluss typischerweise in einer Hinterschneidung des Ankerlochs erfolgt. Eine chemische Verankerung bedeutet einen Stoffschluss und vielfach zusätzlich einen Formschluss; ein Kraftschluss ist dabei nicht ausgeschlossen. Die Erläuterungen in diesem Absatz sind beispielhaft und dienen einer Veranschaulichung von Möglichkeiten, sie sind nicht abschließend.

Das europäische Patent EP 2 809 956 B1 offenbart einen Hinterschnittanker mit einer Spreizhülse, die auf einem Ankerschaft verschiebbar ist, der einen Spreizkopf aufweist. Durch Einziehen des Spreizkopfes in die Ankerhülse bzw. Aufschieben der Ankerhülse auf den Spreizkopf wird die Spreizhülse aufgespreizt und der Hinterschnittanker mechanisch in einem Ankerloch verankert. Zu einer Erkennung eines korrekten Aufspreizens weist der Ankerschaft eine Markierung auf, die sich nach dem Aufspreizen an einem Ende der Spreizhülse befinden muss. Zur Erkennung ist ein optisches Sensorgerät vorgesehen.

Die internationale Patentanmeldung die WO 2015/110201 A1 offenbart einen Spreizdübel, der durch Eindrehen einer Spreizschraube aufspreizbar ist. In dem Spreizdübel ist ein Messgrößenaufnehmer angeordnet, der induktiv eine Anpresskraft eines Verformungselements des Spreizdübels gegen eine Lochwand eines Ankerlochs erfasst. EP 0 605 811 A1 offenbart eine Überwachungsvorrichtung für Bauelemente.

Aufgabe der Erfindung ist, eine Möglichkeit vorzuschlagen, mit der eine Verlagerung eines in einem Ankerloch verankerten Ankers erfasst werden kann. Zu erfassen ist insbesondere eine Bewegung des Ankers in Richtung aus dem Ankerloch heraus, wobei es in der Praxis um Bewegungen im Millimeterbereich oder weniger geht, die lange vor einem Versagen der Verankerung auf das Versagen hinweisen können.

Diese Aufgabe wird erfindungsgemäß durch eine Anordnung mit den Merkmalen des Anspruchs 1 gelöst. Die erfindungsgemäße Anordnung mit den Merkmalen des Anspruchs 1 weist ein Ankerloch in einem Ankergrund und einen in dem Ankerloch angeordneten, insbesondere verankerten Anker auf. Außerdem ist in dem Ankerloch ein elektrischer, beispielsweise ohmscher, induktiver oder kapazitiver Lagegeber angeordnet. Der Lagegeber ist derart im Ankerloch angeordnet, dass sich der Anker zum Lagegeber bewegt, wenn sich der Anker in Richtung aus dem Ankerloch heraus bewegt. Dadurch ist eine Verlagerung des im Ankerloch verankerten Ankers erfassbar und ein mögliches Versagen der Verankerung frühzeitig erkennbar. Insbesondere ist der Anker fest im Ankerloch angeordnet, so dass sich ausschließlich der Anker relativ zum Ankerloch bewegt.

Erfindungsgemäß ist der Lagegeber an einem in dem Ankerloch befindlichen Ende des Ankers in dem Ankerloch angeordnet. "An" umfasst auch eine Anordnung des Lagegebers nahe an oder vor dem Ende des Ankers, wobei "nahe" beispielsweise innerhalb eines oder weniger Millimeter oder weniger als 1 mm bedeutet. Zum einen lässt sich der Lagegeber an oder vor dem in dem Ankerloch befindlichen Ende des Ankers gut im Ankerloch unterbringen und mit dem Anker an die vorgesehene Stelle in das Ankerloch einbringen und zum anderen lässt sich ein mögliches Versagen der Verankerung gut erkennen, wenn eine Verlagerung des Ankers im Ankerloch mit einem Abstand von vorzugsweise mehreren Ankerdurchmessern von einer Lochmündung erfasst wird, also beispielsweise an dem im Ankerloch befindlichen Ende des Ankers.

Erfindungsgemäß ist eine chemische Verankerung des Ankers und eine chemische Befestigung des Lagegebers im Ankerloch vorgesehen. "Chemische Verankerung" und "Befestigung" bedeutet eine Befestigung mit einer ausgehärteten Masse, beispielsweise einem Mörtel, auch einem Kunstharzmörtel, Klebstoff oder Kunstharz. Dies ermöglicht eine einfache Ausführung und Handhabung der Erfindung, es müssen lediglich die aushärtende Masse und der Lagegeber mit dem Anker in das Ankerloch eingebracht werden.

Erfindungsgemäß ist ein Lagegeberhalter vorgesehen, der den Lagegeber beweglich oder lösbar am Anker und gegen ein Mitbewegen mit dem Anker in Richtung aus dem Ankerloch heraus im Ankerloch hält. Bei einer chemischen Verankerung kann der Lagegeberhalter mit der ausgehärteten Masse im Ankerloch befestigt sein, mit der der Anker im Ankerloch verankert ist. Der Lagegeberhalter ermöglicht das Einbringen des Lagegebers in das Ankerloch mit dem Anker. Im Ankerloch hält der Lagegeberhalter den Lagegeber so, dass er sich nicht mit dem Anker mitbewegt, falls sich der Anker in Richtung aus dem Ankerloch heraus bewegt.

Dies ermöglicht eine einfache Handhabung des Lagegebers mit dem Anker.

Eine Ausgestaltung der Erfindung sieht vor, dass der Anker einen elektrischen Kontakt aufweist und der Lagegeber einen elektrischen Gegenkontakt aufweist. Dabei kann der Anker selbst den elektrischen Kontakt bilden, wenn er elektrisch leitend, beispielsweise eine Metallstange ist. Bei einer Bewegung des Ankers in Richtung aus dem Ankerloch heraus gelangt der Kontakt in oder außer elektrisch leitenden Kontakt mit dem Gegenkontakt, wodurch ein Stromkreis geschlossen oder unterbrochen wird, wodurch die Bewegung des Ankers im Ankerloch feststellbar ist.

Eine Weiterbildung der Erfindung sieht mehrere elektrische Gegenkontakte des Lagegebers vor, die in einer Längsrichtung des Ankerlochs hintereinander angeordnet sind. Dadurch ist nicht nur die Tatsache einer Bewegung des Ankers im Ankerloch feststellbar, sondern auch ein Weg bzw. die zurückgelegte Strecke des Ankers in Richtung aus dem Ankerloch heraus. Es lässt sich dadurch erkennen, ob sich der Anker innerhalb einer zulässigen Toleranz im Ankerloch verlagert hat, oder ob die Verlagerung so groß ist, dass ein Versagen der Verankerung wahrscheinlich ist.

Eine weitere Ausgestaltung der Erfindung sieht vor, dass der Anker einen Teil eines Kondensators und der Lagegeber einen anderen Teil eines Kondensators aufweist. Es kann der Anker selbst den einen Teil des Kondensators bilden oder es weist beispielsweise der Anker eine Kondensatorplatte oder dergleichen auf, die elektrisch vom Anker isoliert ist, falls der Anker elektrisch leitend ist. Bei einer Bewegung des Ankers im Ankerloch verändert sich ein Abstand zwischen dem Teil des Kondensators am Anker und dem anderen Teil des Kondensators am Lagegeber, womit sich eine Kapazität des Kondensators ändert, wodurch die Bewegung des Ankers im Ankerloch messbar ist.

Der Lagegeberhalter kann beispielsweise eine Kappe aufweisen, die auf ein Ende des Ankers aufsetzbar ist. Insbesondere dichtet die Kappe den Teil des Ankers, an dem ein oder mehrere Gegenkontakte oder ein Teil des Kondensators angeordnet sind und/oder den Lagegeber gegen ein Eindringen einer aushärtbaren Masse beim Einführen des Ankers in das Ankerloch ab.

Vorzugsweise steht der Lagegeberhalter radial über den Anker über bzw. weist radial über den Anker überstehende Halteelemente, Widerlager oder dgl. zu einem Halten des Lagegeberhalters in einem Ankerloch auf, so dass der Lagegeberhalter im Ankerloch gehalten ist, bis eine aushärtende Masse ausgehärtet ist und den Anker und den Lagegeberhalter im Ankerloch hält. Bei einer mechanischen Verankerung hält der Lagegeberhalter durch sein Übermaß oder ein Übermaß seiner Halteelemente in Bezug auf den Anker und vorzugsweise auch in Bezug auf das Ankerloch mechanisch ohne Stoffschluss im Ankerloch.

Die Erfindung wird nachfolgend anhand in der Zeichnung dargestellter Ausführungsbeispiele näher erläutert. Es zeigen:
- Figur 1: ein erstes Befestigungssystem gemäß der Erfindung;
- Figur 2: den Lagegeberhalter aus Figur 1;
- Figur 3: eine Anordnung des Ankers mit dem Lagegeberhalter in einem Ankerloch in einem Ankergrund gemäß der Erfindung;
- Figur 4: ein zweites Ausführungsbeispiel eines Befestigungssystems gemäß der Erfindung.

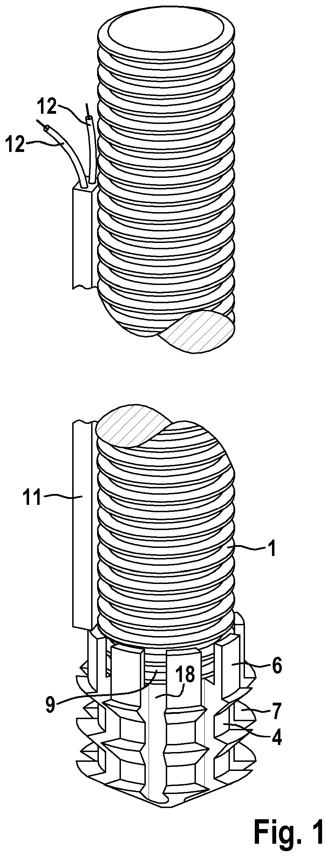

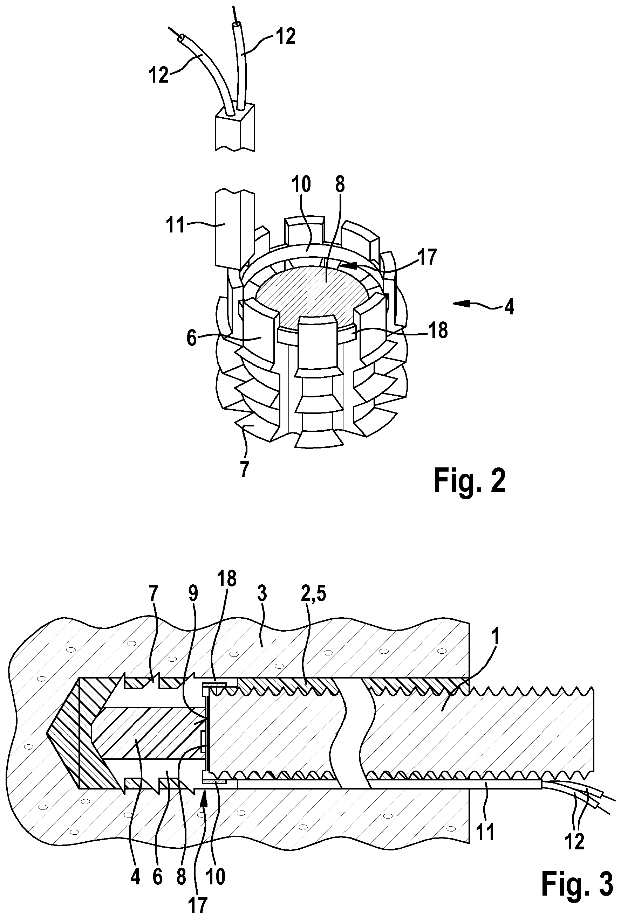

Figur 1 zeigt ein erfindungsgemäßes Befestigungssystem mit einem Anker 1, der zu einer Verankerung in einem Ankerloch 2 in einem Ankergrund 3 wie in Figur 3 dargestellt vorgesehen ist, mit einem Lagegeberhalter 4 und einem Lagegeber 17. Der Anker 1 ist eine Gewindestange, die zu einer chemischen Verankerung vorgesehen ist, das heißt einer Befestigung mit einer aushärtenden bzw. ausgehärteten Masse 5. Die aushärtende bzw. ausgehärtete Masse 5 ist beispielsweise ein Zement- oder Kunstharzmörtel. Der Lagegeberhalter 4 weist eine Kappe 18 auf, die auf ein Ende des Ankers 1 aufgesetzt ist. Im Ausführungsbeispiel besteht der Lagegeberhalter 4 aus einem Kunststoff und weist Längsschlitze in seinem Umfang auf, durch die radial federnde Halteelemente 6 gebildet sind, die den Lagegeberhalter 4 auf dem Ende des Ankers 1 halten. Die Halteelemente 6 weisen sägezahnförmige Widerhaken 7 auf, die radial über den Anker 1 überstehen. In unverformtem Zustand stehen die Widerhaken 7 der Halteelemente 6 auch radial über eine Lochwand des Ankerlochs 2 über, so dass die Widerhaken 7 den Lagegeberhalter 4 im Ankerloch 2 halten.

Der Lagegeberhalter 4 weist eine Metallscheibe, eine metallisierte Oberfläche oder ein sonstiges, elektrisch leitendes Element als Lagegeber 17 auf, das einen elektrisch leitenden Gegenkontakt 8 für den Anker 1 bildet und in Figuren 2 und 3 zu sehen ist. Im Ausführungsbeispiel besteht der Anker 1 aus Metall und seine Stirnfläche bildet einen Kontakt 9, der in elektrisch leitendem Kontakt mit dem Gegenkontakt 8 des Lagegeberhalters 4 steht, wenn der Lagegeberhalter 4 wie vorgesehen auf das Ende des Ankers 1 aufgesetzt ist, so dass die Stirnfläche des Ankers 1 den Gegenkontakt 8 im Lagegeberhalter 4 berührt. Sofern der Anker 1 nicht aus einem elektrisch leitenden Material besteht, kann er auch eine Scheibe oder ein sonstiges elektrisch leitendes Element an seiner Stirnfläche oder eine metallisierte Stirnfläche aufweisen, das/die den Kontakt 9 bildet.

Der Lagegeber 17 umfasst außer dem als Metallscheibe ausgebildeten Gegenkontakt 8 einen Metallring als weiteren Gegenkontakt 10, der den Anker 1 umschließt und in elektrisch leitendem Kontakt mit dem Anker 1 steht, wenn der Lagegeberhalter 4 wie vorgesehen auf das eine Ende des Ankers 1 aufgesetzt ist. Der Anker 1 bildet auch für den weiteren Gegenkontakt 10 einen elektrisch leitenden Kontakt 9.

Eines der Halteelemente 6 des Lagegeberhalters 4 weist eine Verlängerung auf, die achsparallel entlang eines Umfangs des Ankers 1 verläuft, wenn der Lagegeberhalter 4 wie vorgesehen auf das eine Ende des Ankers 1 vorgesetzt ist. Die Verlängerung bildet einen Kabelkanal 11, in dem Kabel 12 am Anker 1 entlang geführt sind, die elektrisch leitend mit den Gegenkontakten 8, 10 des Lagegeberhalters 4 verbunden und vom Anker 1 isoliert sind.

Zu einer Verankerung, das heißt Befestigung des Ankers 1 in dem Ankerloch 2 im Ankergrund 3 wird die aushärtende Masse 5 und anschließend der Anker 1 mit dem auf sein eigenes Ende aufgesetzten Lagegeberhalter 4 so in das Ankerloch 2 eingebracht, dass sich der Lagegeberhalter 4 an einem in einer Einbringrichtung vorderen Ende des Ankers 1 befindet. Das Ankerloch 2 ist beispielsweise gebohrt oder in anderer Weise erstellt oder bereits vorhanden. Der Ankergrund 3 besteht beispielsweise aus Stein, Beton oder Mauerwerk. Beim Einbringen des Ankers 1 wird die aushärtende Masse 5 von einem Lochgrund in Richtung einer Lochmündung in einen Ringspalt zwischen dem Lagegeberhalter 4 und dem Anker 1 einerseits und einer Lochwand des Ankerlochs 2 andererseits verdrängt, so dass die aushärtende Masse 5 den den Lagegeberhalter 4 und den Anker 1 im Ankerloch 2 umgebenden Ringspalt ausfüllt. Dabei verhindert die Kappe 18, dass die Masse 5 zum Lagegeber 17 gelangt. Nach einem Aushärten der aushärtende Masse 5, die dann als ausgehärtete Masse 5 zu bezeichnen ist, sind der Lagegeberhalter 4 und der Anker 1 durch Stoff- und Formschluss im Ankerloch 2 im Ankergrund 3 befestigt, das heißt verankert. Der Kabelkanal 11 verläuft im Ringspalt zwischen dem Anker 1 und dem Ankerloch 2 aus der Lochmündung heraus, wo die Kabel 12 kontaktiert werden können.

Verlagert sich der im Ankerloch 2 verankerte Anker 1 bei einer axialen Zugbeanspruchung entgegen der Einbringrichtung in einer Ausziehrichtung bzw. in einer Richtung aus dem Ankerloch 2 heraus, weg vom Lochgrund in Richtung der Lochmündung, tritt zunächst der Kontakt 9 des Ankers 1 außer Kontakt vom Gegenkontakt 8 des Lagegebers 17, wodurch die Verlagerung des Ankers 1 feststellbar ist. Verlagert sich der Anker 1 weiter in Richtung der Lochmündung, tritt der Kontakt 9 des Ankers 1 auch außer Kontakt von dem weiteren Gegenkontakt 10 des Lagegebers 17. Im Ausführungsbeispiel tritt der Kontakt 9 des Ankers 1 bei einer Verlagerung des Ankers 1 von 0,8 mm und mehr außer Kontakt vom weiteren Gegenkontakt 10. Im Ausführungsbeispiel weist die den Anker 1 bildende Gewindestange ein Gewinde der Größe M12 auf. Im Ausführungsbeispiel wird eine Verlagerung des Ankers 1 in Richtung der Lochmündung des Ankerlochs 2 um bis zu 0,8 mm als innerhalb einer zulässigen Toleranz angesehen, eine größere Verlagerung ist unzulässig und erfordert Sicherungsmaßnahmen, beispielsweise das Setzen eines oder mehrerer Ersatzanker. Das Einhalten oder Überschreiten der zulässigen Toleranz der Verlagerung des Ankers 1 in Richtung der Lochmündung des Ankerlochs 2 ist durch das In-elektrisch-leitendem-Kontakt-Stehen oder Außer-elektrisch-leitendem-Kontakt-Treten des Kontakts 9 des

Ankers 1 mit dem weiteren Gegenkontakt 10 des Lagegeberhalters 4 an den Kabeln 12 außerhalb des Ankergrunds 3 feststellbar.

Der Anker 1 als elektrischer Kontakt 9 und die beiden Gegenkontakte 8, 10 bilden zwei elektrische Lagegeber, die in einer Längsrichtung des Ankerlochs 2 hintereinander angeordnet sind. Der Lagegeberhalter 4 und die in ihm angeordneten Gegenkontakte 8, 10 sind durch die ausgehärtete Masse 5 fest im Ankerloch 2 verankert und bewegen sich nicht mit, wenn sich der Anker 1 in Richtung der Lochmündung verlagert, wodurch die Verlagerung des Ankers 1 in Bezug zum Ankergrund 3 feststellbar ist.

In unverformtem Zustand des Lagegeberhalters 4 außerhalb des Ankerlochs 1 befinden sich die Widerhaken 7 der Halteelemente 6 auf einem größeren Durchmesser als einem Durchmesser des Ankerlochs 2 bzw. einem dem Anker 1 zugeordneten Nenndurchmesser eines solchen Ankerlochs 2, so dass die Widerhaken 7 der Halteelemente 6 mit einer Vorspannung gegen die Lochwand des Ankerlochs 2 drücken, wenn sich der Lagegeberhalter 4 in dem Ankerloch 2 befindet. Der Lagegeberhalter 4 hält deswegen auch ohne aushärtende Masse 5 in einem Ankerloch 2, wenn ein Lochdurchmesser nicht größer als der Durchmesser ist, auf dem sich die Widerhaken 7 der Halteelemente 6 des Lagegeberhalters 4 befinden. Der Lagegeberhalter 4 lässt sich deswegen auch mit einem Anker, beispielsweise einem Spreizanker verwenden, der ohne aushärtende Masse mechanisch beispielsweise durch Aufspreizen in einem Ankerloch verankert wird (nicht dargestellt). Erfindungsgemäß sind ein solcher Anker und der Lagegeberhalter 4 so ausgebildet, dass der Lagegeberhalter 4 auf das Ende des Ankers aufsetzbar oder in anderer Weise lösbar an dem Ende des Ankers anbringbar ist, mit dem voran der Anker in das Ankerloch eingebracht wird. Die lösbare Verbindung des Lagegeberhalters 4 mit dem Anker ist schwächer als ein Halt des Lagegeberhalters 4 mit seinen gegen die Lochwand drückenden Widerhaken 7 im Ankerloch 2, so dass sich der Lagegeberhalter 4 nicht mit dem Anker mitbewegt, wenn sich dieser in Richtung der Lochmündung verlagert.

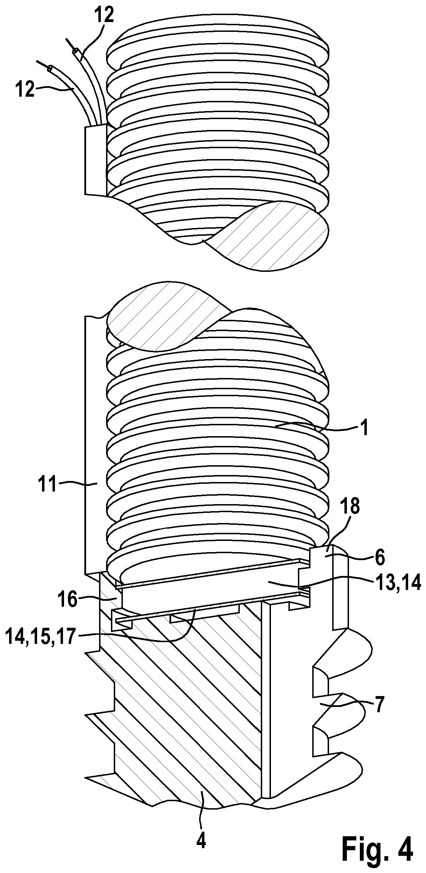

In Figur 4 ist der Anker 1 ebenfalls eine Gewindestange und der Lagegeberhalter 4 ist mit der Ausnahme, dass er keinen Metallring als weiteren Gegenkontakt 10 aufweist, gleich ausgebildet wie zu Figuren 1 bis 3 beschrieben. Der Anker 1 aus Figur 4 weist an seiner Stirnfläche eine Metallscheibe als ein Teil 13 eines Kondensators 14 und der Lagegeberhalter 4 eine Metallscheibe, die in einer Radialebene angeordnet ist und bei dieser Ausführung der Erfindung ein anderes Teil 15 des Kondensators 14 bildet, auf. Die das eine erste Teil 13 des Kondensators 14 bildende Metallscheibe ist elektrisch vom Anker 1 isoliert, wenn der Anker 1 aus Metall oder einem sonstigen elektrisch leitenden Material besteht. Der andere, am Lagegeberhalte 4 angeordnete zweite Teil 15 des Kondensators 14 bildet den Lagegeber 17, der als Lagereferenz dient. Der Lagegeberhalter 4 weist einen umlaufenden, nach innen stehenden Bund als Anschlag 16 für den Anker 1 auf, der einen Abstand zwischen den beiden Teilen 13, 15 des Kondensators 14 sicherstellt. Verlagert sich der Anker 1 in einem Ankerloch 2 in Richtung einer Lochmündung, vergrößert sich ein Abstand zwischen den beiden Teilen 13, 15 des Kondensators 14 und verkleinert oder jedenfalls ändert sich eine Kapazität des Kondensators 14. Der Lagegeberhalter 4 mit dem anderen Teil 15 des Kondensators 14 ist fest im Ankerloch und bewegt sich bei einer Verlagerung des Ankers 1 in Richtung einer Lochmündung nicht mit. Durch Messung der Kapazität des Kondensators 14 ist die Verlagerung des Ankers 1 messbar. Gemessen wird beispielsweise eine Auf- oder Entladezeit des Kondensators 14.

Zur Vermeidung von Wiederholungen werden zur Erläuterung der Figur 4 ergänzend die Erläuterungen der Figuren 1 bis 3 in Bezug genommen. Gleiche Elemente sind in Figur 4 mit gleichen Bezugszahlen wie in Figuren 1 bis 3 versehen. Der Kondensator 14 mit seinen beiden Teilen 13, 15 bildet einen elektrischen Lagegeber des Ankers 1 mit dem auf sein eines Ende aufgesetzten Lagegeberhalter 4.

### Bezugszeichenliste

### Anordnung eines Ankers in einem Ankerloch und Befestigungssystem

- 1: Anker
- 2: Ankerloch
- 3: Ankergrund
- 4: Lagegeberhalter
- 5: aushärtende- bzw. ausgehärtete Masse
- 6: Halteelemente
- 7: Widerhaken
- 8: Gegenkontakt
- 9: Kontakt
- 10: weiterer Gegenkontakt
- 11: Kabelkanal
- 12: Kabel
- 13: Teil des Kondensators 14
- 14: Kondensator
- 15: anderes Teil des Kondensators 14
- 16: Anschlag
- 17: Lagegeber
- 18: Kappe

## Patentansprüche

1. Anordnung, die ein Ankerloch (2) in einem Ankergrund (3) und einen in dem Ankerloch (2) angeordneten Anker (1) aufweist, wobei im Ankerloch (2) ein elektrischer Lagegeber (17) angeordnet ist, in Bezug auf den sich der Anker (1) bewegt, wenn der Anker (1) sich in Richtung aus dem Ankerloch (2) heraus bewegt, **dadurch gekennzeichnet, dass** der Lagegeber (17) an einem in dem Ankerloch (2) befindlichen Ende des Ankers (1) in dem Ankerloch (2) angeordnet ist, dass der Anker (1) und der Lagegeber (17) mit einer ausgehärteten Masse (5) im Ankerloch (2) befestigt sind und dass der Anker (1) einen Lagegeberhalter (4) aufweist, der den Lagegeber (17) beweglich oder lösbar am Anker (1) und gegen ein Mitbewegen mit dem Anker (1) in der Längsrichtung des Ankerlochs (2) hält, derart, dass der Lagegeber (17) sich nicht mit dem Anker (1) mitbewegt, falls sich der Anker (1) in Richtung aus dem Ankerloch (2) heraus bewegt.

2. Anordnung nach Anspruch 1, **dadurch gekennzeichnet, dass** der Anker (1) mindestens einen elektrischen Kontakt (9) und der Lagegeber (17) mindestens einen elektrischen Gegenkontakt (8) aufweist, der bei einer Bewegung des Ankers (1) in Richtung aus dem Ankerloch (2) heraus in oder außer elektrisch leitenden Kontakt mit dem Kontakt (9) des Ankers (1) gelangt.

3. Anordnung nach Anspruch 2, **dadurch gekennzeichnet, dass** der Lagegeber (17) mehrere elektrische Gegenkontakte (8, 10) aufweist, die in der Längsrichtung des Ankerlochs (2) hintereinander angeordnet sind.

4. Anordnung nach Anspruch 1, **dadurch gekennzeichnet, dass** der Anker (1) einen Teil (13) eines Kondensators (14) aufweist und der Lagegeber (17) einen anderen Teil (15) des Kondensators (14) aufweist, dessen Kapazität sich bei einer Bewegung des Ankers (1) in der Längsrichtung des Ankerlochs (2) ändert.

5. Anordnung nach einem der vorstehenden Ansprüche, **dadurch gekennzeichnet, dass** der Lagegeberhalter (4) eine auf ein Ende des Ankers (1) aufsetzbare Kappe (18) aufweist.

6. Anordnung nach Anspruch 5, **dadurch gekennzeichnet, dass** der Lagegeberhalter (4) radial über den Anker (1) übersteht.

7. Anordnung nach einem der Ansprüche 5 oder 6, **dadurch gekennzeichnet, dass** der Lagegeberhalter (4) radial über den Anker (1) überstehende Halteelemente (6) zu einem Halten des Lagegeberhalters (4) in einem Ankerloch (2) aufweist.

8. Anordnung nach einem der Ansprüche 5 bis 7, **dadurch gekennzeichnet, dass** der Lagegeberhalter (4) einen Kabelkanal (11), der in einer Längsrichtung an dem Anker (1) entlangführt, zu einer Kontaktierung des elektrischen Lagegebers (17) des Lagegeberhalters (4) außerhalb eines Ankerlochs (2) aufweist.

## Claims

1. Arrangement having an anchoring hole (2) in an anchoring substrate (3) and an anchor (1) arranged in the anchoring hole (2), wherein in the anchoring hole (2) there is arranged an electrical position sensor (17) relative to which the anchor (1) moves if the anchor (1) moves in a direction out of the anchoring hole (2), **characterised in that** the position sensor (17) is arranged in the anchoring hole (2) at an end of the anchor (1) that is located in the anchoring hole (2); the anchor (1) and the position sensor (17) are fixed in the anchoring hole (2) with a cured composition (5); and the anchor (1) has a position sensor holder (4) which holds the position sensor (17) movably or releasably on the anchor (1) and against movement together with the anchor (1) in the longitudinal direction of the anchoring hole (2), in such a way that the position sensor (17) does not move together with the anchor (1) if the anchor (1) moves in a direction out of the anchoring hole (2).

2. Arrangement according to claim 1, **characterised in that** the anchor (1) has at least one electrical contact (9) and the position sensor (17) has at least one electrical counter-contact (8) which moves into or out of electrically conducting contact with the contact (9) of the anchor (1) in the event of a movement of the anchor (1) in a direction out of the anchoring hole (2).

3. Arrangement according to claim 2, **characterised in that** the position sensor (17) has a plurality of electrical counter-contacts (8, 10) which are arranged one after the other in the longitudinal direction of the anchoring hole (2).

4. Arrangement according to claim 1, **characterised in that** the anchor (1) has a part (13) of a capacitor (14) and the position sensor (17) has another part (15) of the capacitor (14), the capacitance of which changes in the event of a movement of the anchor (1) in the longitudinal direction of the anchoring hole (2).

5. Arrangement according to any one of the preceding claims, **characterised in that** the position sensor holder (4) has a cap (18) which is mountable on an end of the anchor (1).

6. Arrangement according to claim 5, **characterised in that** the position sensor holder (4) projects radially beyond the anchor (1).

7. Arrangement according to either one of claims 5 and 6, **characterised in that** the position sensor holder (4) has holding elements (6) which project radially beyond the anchor (1) for holding the position sensor holder (4) in an anchoring hole (2).

8. Arrangement according to any one of claims 5 to 7, **characterised in that** the position sensor holder (4) has a cable channel (11), which runs in a longitudinal direction alongside the anchor (1), for contacting the electrical position sensor (17) of the position sensor holder (4) outside an anchoring hole (2).

## Revendications

1. Agencement comprenant un trou d'ancrage (2) pratiqué dans une base d'ancrage (3), et une pièce d'ancrage (1) disposée dans ledit trou d'ancrage (2), lequel trou d'ancrage (2) renferme un capteur électrique de positions (17) par rapport auquel la pièce d'ancrage (1) se meut lorsque ladite pièce d'ancrage (1) accomplit un mouvement dans une direction d'extraction hors du trou d'ancrage (2), **caractérisé par le fait que** le capteur de positions (17) est disposé, dans le trou d'ancrage (2), au niveau d'une extrémité de la pièce d'ancrage (1) située dans ledit trou d'ancrage (2) ; **par le fait que** la pièce d'ancrage (1) et le capteur de positions (17) sont fixés dans le trou d'ancrage (2) à l'aide d'une masse durcie (5) ; et **par le fait que** ladite pièce d'ancrage (1) est munie d'un support (4) de capteur de positions qui retient ledit capteur de positions (17) sur ladite pièce d'ancrage (1), de manière mobile ou libérable, et à l'encontre d'un mouvement conjoint avec ladite pièce d'ancrage (1) dans la direction longitudinale du trou d'ancrage (2), de façon telle que ledit capteur de positions (17) ne se meuve pas conjointement à ladite pièce d'ancrage (1) dans le cas où ladite pièce d'ancrage (1) accomplit un mouvement dans une direction d'extraction hors dudit trou d'ancrage (2).

2. Agencement selon la revendication 1, **caractérisé par le fait que** la pièce d'ancrage (1) est pourvue d'au moins un contacteur électrique (9), et le capteur de positions (17) est doté d'au moins un contacteur électrique complémentaire (8) qui, lors d'un mouvement de la pièce d'ancrage (1) dans une direction d'extraction hors du trou d'ancrage (2), vient en, ou hors contact électriquement conducteur avec ledit contacteur (9) de ladite pièce d'ancrage (1).

3. Agencement selon la revendication 2, **caractérisé par le fait que** le capteur de positions (17) comprend plusieurs contacteurs électriques complémentaires (8, 10) placés en succession dans la direction longitudinale du trou d'ancrage (2).

4. Agencement selon la revendication 1, **caractérisé par le fait que** la pièce d'ancrage (1) comporte une partie (13) d'un condensateur (14), et le capteur de positions (17) comporte une autre partie (15) dudit condensateur (14) dont la capacité varie lors d'un mouvement de la pièce d'ancrage (1) dans la direction longitudinale du trou d'ancrage (2).

5. Agencement selon l'une des revendications précédentes, **caractérisé par le fait que** le support (4) du capteur de positions est muni d'un capuchon (18) pouvant être mis en place sur une extrémité de la pièce d'ancrage (1).

6. Agencement selon la revendication 5, **caractérisé par le fait que** le support (4) du capteur de positions fait saillie radialement au-delà de la pièce d'ancrage (1).

7. Agencement selon l'une des revendications 5 ou 6, **caractérisé par le fait que** le support (4) du capteur de positions est nanti d'éléments de retenue (6) faisant saillie radialement, au-delà de la pièce d'ancrage (1), en vue d'un maintien dudit support (4) du capteur de positions dans un trou d'ancrage (2).

8. Agencement selon l'une des revendications 5 à 7, **caractérisé par le fait que** le support (4) du capteur de positions est pourvu d'un canal de câblage (11) longeant la pièce d'ancrage (1) dans une direction longitudinale en vue d'une mise en contact, à l'extérieur d'un trou d'ancrage (2), du capteur électrique de positions (17) dudit support (4) dudit capteur de positions.
